(19)

Europäisches Patentamt
European Patent Office
Office européen des brevets

(11) **EP 4 495 551 A1**

(12) **EUROPEAN PATENT APPLICATION**
published in accordance with Art. 153(4) EPC

(43) Date of publication:
**22.01.2025 Bulletin 2025/04**

(21) Application number: **22931697.1**

(22) Date of filing: **16.08.2022**

(51) International Patent Classification (IPC):
**G01C 25/00** (2006.01)

(86) International application number:
**PCT/CN2022/112710**

(87) International publication number:
**WO 2023/173675 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.03.2022 CN 202210248904**

(71) Applicant: **Beijing Institute of Control
Engineering
Beijing 100086 (CN)**

(72) Inventors:
 • **WANG, Li
   Beijing 100086 (CN)**
 • **YUAN, Li
   Beijing 100086 (CN)**

 • **WU, Yanpeng
   Beijing 100086 (CN)**
 • **ZHONG, Jun
   Beijing 100086 (CN)**
 • **ZHENG, Ran
   Beijing 100086 (CN)**
 • **LI, Lin
   Beijing 100086 (CN)**
 • **WANG, Xiaoyan
   Beijing 100086 (CN)**
 • **LI, Yuming
   Beijing 100086 (CN)**
 • **WANG, Miaomiao
   Beijing 100086 (CN)**

(74) Representative: **advotec.
Patent- und Rechtsanwaltspartnerschaft
Tappe mbB
Widenmayerstraße 4
80538 München (DE)**

(54) **JITTER COMPENSATION DEVICE AND METHOD FOR HIGH-PRECISION POINTING SYSTEM**

(57) A jitter compensation device and method for a high-precision pointing system, which belong to the field of self-adaptive optics. According to the method, by means of setting up a special optical device, jitter analysis is performed by using a high-power microscope system on a self-collimation image reflected by a product end, and then a two-dimensional reflector is driven to rotate quickly, thereby achieving jitter compensation of the entire system. By means of the method, a jitter compensation precision can surpass 0.1", and the resolution can surpass 0.01", thereby providing high-precision test conditions for a high-precision sensor.

FIG. 1

EP 4 495 551 A1

## Description

This application claims priority to Chinese patent application No. 202210248904.0, filed on March 14, 2022, titled "jitter compensation device and method for high-precision pointing system", the entire contents of which are incorporated herein by reference.

## TECHNICAL FIELD

The disclosure relates to a jitter compensation device for a high-precision pointing system and a jitter compensation method, and belongs to a field of adaptive optics.

## BACKGROUND

Traditionally, the precision test of pointing sensors conducted on the ground can only measure at a limit level of 1". For tests with higher precision, the influencing factors include air disturbance, ground jitter, and specific random jitter inside the equipment with motor-controlled components. Air disturbance can be eliminated by installing the entire set of equipment in a confined space and controlling the airflow in the confined space. Ground jitter can be eliminated to a certain extent through the foundation, but the highest level is usually Level E. The jitter inside the equipment can only be reduced to a certain extent but cannot be eliminated. The ground precision tests performed by taking various control measures and using traditional methods cannot realize precision tests for pointing sensors with higher precision.

## SUMMARY

The purposes of the disclosure are to overcome a jitter problem of a traditional precision test system and to provide a high-stability simulation system that can realize a sensor test with milli-arcsecond precision.

Technical solutions of the disclosure are provided as follows.

A jitter compensation device for a high-precision pointing system is provided. The device includes: an adjustable color temperature light source (1), a reticle (2), an adjustable diaphragm (3), a light source collimation system (4), a beam splitting system (5), a neutral attenuation sheet (6), a reflecting mirror (7), a jitter compensation system (11), a signal light beam-expanding system (12), a reference light beam-expanding system (8), a microscopic imaging system (9), a detector (10), a sensor (13) and a mounting bracket (14) of the sensor (13);

in which the adjustable color temperature light source (1) emits quasi-monochromatic light and composite light with different color temperatures to illuminate the reticle (2), the quasi-monochromatic light and the composite light are collimated into quasi-parallel light by the light source collimation system (4), and then split into a reference light beam and a test light beam by the beam splitting system (5), in which the reference light beam propagates toward the neutral attenuation plate (6), and the test light beam propagates toward the jitter compensation system (11), and the adjustable diaphragm (3) is provided between the reticle (2) and the light source collimation system (4) to control an amount of light passing through and suppress stray light;

the reference light beam first passes through the neutral attenuation plate (6) for a first energy attenuation, and then after being reflected by the reflecting mirror (7), passes through the neutral attenuation plate (6) for a second energy attenuation, and the light beam after the second energy attenuation is split into a second reference light beam and a third reference light beam by the beam splitting system (5), in which the second reference light beam propagates toward the reference light beam-expanding system (8), the third reference light beam propagates toward the light source collimation system (4) and as a non-working light beam, is absorbed by structure, and the second reference light beam, after being expanded, is directly imaged via the microscopic imaging system (9) and received by the detector (10); and

the test light beam passes through the jitter compensation system (11), the signal light beam-expanding system (12) and finally reaches a focal plane of the sensor (13), a reflecting mirror is arranged at an entrance of a secondary mirror of the sensor, and a part of the test light beam is reflected by the reflecting mirror back to the signal light beam-expanding system (12) and then propagates to the beam splitting system (5) through the jitter compensation system (11), to form a second test light beam and a third test light beam, in which the third test light beam propagates toward the light source collimation system (4), and as a non-working light beam, is absorbed by structure, and the second test light beam propagates toward the reference light beam-expanding system (8), and is expanded by the reference light beam-expanding system (8) and amplified by the microscopic imaging system (9), and then received by the detector (10).

Furthermore, the adjustable color temperature light source (1) uses a light emitting diode (LED) as a light source to emit the quasi-monochromatic light and the composite light with different color temperatures, an energy of the emitted quasi-monochromatic light and the emitted composite light meets a sensitivity requirement of the pointing measurement sensor (13) for a fixed star sensitivity in a range of 0Mv to 10Mv; and a spectral range of the adjustable color temperature light source (1) is a whole spectral range of 400nm to 900nm.

Furthermore, the reticle (2) is processed by mask etching, types of fixed star spots distributed on the reticle comprise a fixed star spot in a specific sky area and a star spot in an array, and the distributed star spots have different calibers; in order to ensure an intensity of light energy of a returned signal light, a diameter of a central star spot is designed to be 400 microns, and peripheral star spots are etched by equivalent to star spot diameters through different star spot magnitude relationships.

Furthermore, the light source collimation system (4) performs an aberration elimination process on a whole spectral range to ensure that a size of dispersion speckle is smaller than a diameter of the minimum star spot on the reticle.

Furthermore, a light beam-splitting ratio of the beam splitting system (5) is controlled to be 50%: 50%, to split a collimated light beam.

Furthermore, the neutral attenuation plate (6) attenuates an energy of the reference light beam to ensure that an energy difference between a light spot of the second test light beam and a light spot of the second reference light beam is within 10%, and the neutral attenuation plate (6) also limits an aperture of the reference light beam; and

an angle between the reflecting mirror (7) and an optical axis is 90.2°, so that a pixel pitch between a light spot of the returned second reference light beam and a light spot of the returned second test light beam is greater than 50 pixels.

Furthermore, the jitter compensation reflecting mirror (11) is rotatable around two axes to adjust a light emitting direction, a jitter frequency of the jitter compensation reflecting mirror (11) is greater than 500 Hz, and Proportional-Integral-Derivative (PID) is used to control swing of the jitter compensation reflecting mirror, to achieve a compensation for environmental jitter not greater than 100 Hz, in which the two axes are a pitch axis and a yaw axis, respectively.

Furthermore, the signal light beam-expanding system (12) is a telescopic system, and is configured to expand a light beam from 30mm to 200 mm, and the signal light beam-expanding system (12) adopts a two-reflecting mirror design, in which a primary mirror is designed into a positive axis paraboloid, and a secondary mirror is designed into a positive axis hyperboloid;

the sensor (13) is a measured star sensor to be measured, and the mounting bracket (14) is used for mounting the sensor (13); and
the reference light beam-expanding system (8) comprises two stages of beam-expanding, during a beam-expanding process, a light beam is first expanded from 3.2mm to 40 mm and then expanded from 40 mm to 400mm, a first stage of beam-expanding adopts a structure of a transmission telescope system, and a second stage of beam-expanding system adopts a two-reflecting mirror design with a beam-expanding ratio of 12.5 times, in which primary and secondary mirrors are designed as positive axis parabolic mirrors, and both are made of microcrystalline glass.

Furthermore, the microscopic imaging system (9) amplifies and images the reference light beam and a signal light beam, the microscopic imaging system (9) adopts a two-reflecting mirror design to converge the obtained 400mm light beam, and has a focal length of 5000mm, in which a primary mirror is designed into a positive axis paraboloid, and a secondary mirror is designed into a positive axis hyperboloid; and
the detection imaging system (10) is capable of detecting a reflected light energy at 10 Mv and achieving star spot extraction greater than 500 Hz.

The disclosure also provides a jitter compensation method, the method includes the following steps:

Step 1, extracting, by the microscopic imaging system, centroids of two detected light spots;
Step 2, determining an offset amount by comparing the centroid obtained by returning the second test light beam with a case without jitter compensation, and if there is an offset, driving pitch and yaw axes of the jitter compensation reflecting mirror for jitter compensation; and
Step 3, re-determining an offset between light spots formed by the second test light beam and the second reference light beam through the microscopic imaging system, repeating steps 2 and 3 until there is no offset between light spots of the second test light beam and the second reference light beam, and monitoring a next moment after the jitter compensation is completed.

The advantages of the disclosure compared with the related art are illustrated below.

The calibration device of the disclosure compares and judges the signal light and the reference light, and compensates by rapidly swinging the two axes of the jitter compensation reflecting mirror, so that a stable light beam at the signal end can be obtained, thereby providing highly stable fixed star light for the precision test of high-precision or ultra-high-precision sensors.

**BRIEF DESCRIPTION OF THE DRAWINGS**

FIG. 1 is a schematic diagram of a calibration device of the disclosure.
FIG. 2 is a flowchart of a jitter compensation process of the disclosure.

**DETAILED DESCRIPTION**

The disclosure splits a collimated light beam from a light resource into a reference light and a signal light. The signal light is reflected by a reflecting mirror arranged on a front end surface of a sensor. The pitch and yaw of the jitter compensation reflecting mirror are controlled by resolving the signal light and the reference light, thereby ensuring a high stability of the emitted light and providing fixed star spots for a precision test of the high-precision sensor.

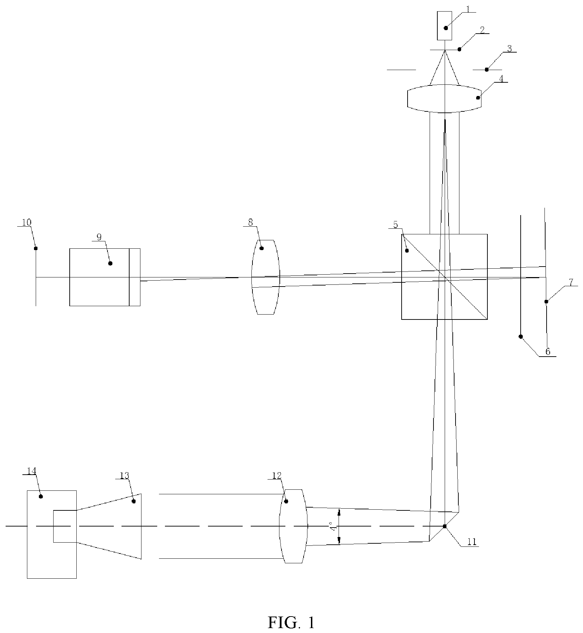

The overall structure of a jitter compensation device of the disclosure is shown in FIG. 1. The device includes: an adjustable color temperature light source 1, a reticle 2, an adjustable diaphragm 3, a light source collimation system 4, a beam splitting system 5, a neutral attenuation sheet 6, a reflecting mirror 7, a jitter compensation system 11, a signal light beam-expanding system 12, a reference light beam-expanding system 8, a microscopic imaging system 9, a detector 10, a sensor 13 and a mounting bracket 14 of the sensor 13.

The adjustable color temperature light source 1 emits quasi-monochromatic light and composite light with different color temperatures to illuminate the reticle 2, the quasi-monochromatic light and the composite light are collimated into quasi-parallel light by the light source collimation system 4, and then split into a reference light beam and a test light beam by the beam splitting system 5. The reference light beam propagates toward the neutral attenuation plate 6, and the test light beam propagates toward the jitter compensation system 11. The adjustable diaphragm 3 is provided between the reticle 2 and the light source collimation system 4 to control an amount of light passing through and suppress stray light.

The reference light beam first passes through the neutral attenuation plate 6 for a first energy attenuation, and then after reflection through the reflecting mirror 7, passes through the neutral attenuation plate 6 for a second energy attenuation. The light beam after the second energy attenuation is split into a second reference light beam and a third reference light beam by the beam splitting system 5. The second reference light beam propagates toward the reference light beam-expanding system 8, and the third reference light beam propagates toward the light source collimation system 4. The third reference light beam is a non-working light beam and is absorbed by structure. The second reference light beam, after being expanded, is directly imaged via the microscopic imaging system 9 and received by the detector 10.

The test light beam passes through the jitter compensation system 11, the signal light beam-expanding system 12 and finally reaches a focal plane of the sensor 13. A reflecting mirror is arranged at an entrance of a secondary mirror of the sensor. A part of the test light beam is reflected by the reflecting mirror back to the signal light beam-expanding system 12 and then propagates to the beam splitting system 5 through the jitter compensation system 11, to form a second test light beam and a third test light beam. The third test light beam propagates toward the light source collimation system 4, and the third test light beam is a non-working light beam and is absorbed by structure. The second test light beam propagates toward the reference light beam-expanding system 8, and is expanded by the reference light beam-expanding system 8 and amplified by the microscope imaging system 9, and then received by the detector 10.

The adjustable color temperature light source 1 uses a light emitting diode (LED) as a light source, which can emit the quasi-monochromatic light and the composite light with different color temperatures, such as a color temperature of 6000K. An energy of the emitted light can meet a sensitivity requirement of the pointing measurement sensor 13 for a fixed star sensitivity in a range of 0Mv to 10Mv, and a spectral range of the adjustable color temperature light source 1 is a whole spectral range of 400nm to 900nm.

The reticle 2 is processed by mask etching. Types of fixed star spots distributed on the reticle include a fixed star spot in a specific sky area and a star spot in an array. The distributed star spots have different calibers. In order to ensure an intensity of light energy of a returned signal light, a diameter of a central star spot on the reticle 2 is designed lager to be 400 microns, and peripheral star spots are etched by equivalent to star spot diameters through different star spot magnitude relationships.

A 20mm reflecting mirror is placed at the center of the sensor to reflect a jitter signal to be measured. After returning to a detection branch, an aperture of the jitter signal light is reduced to 3.2mm. A vibration signal light beam needs to be expanded to an acceptable range. According to the requirements of star magnitude, the light beam received by the sensor is very weak, and the returned light beam is even weaker due to the limited aperture. The above factor should be fully considered, and a frame rate should be taken into account to select a suitable charge coupled device (CCD0 to meet the requirements. In order to achieve a compensation accuracy of 0.1", and a compensation resolution reaches 0.01", an star spot positioning is performed using a centroid compensation algorithm. When the vibration signal light beam is offset, the CCD pixel corresponds to 0.1". The detection star spot signal occupies 3-8 CCD pixels, thereby ensuring the detection accuracy.

The input light flux from an end face of the reflecting mirror of the sensor to a detection system is $\phi_1$. Since the simulation of 10-magnitud star is the limiting detection case of the system, the corresponding luminance value is $2.67 \times 10^{-10}$lx, and a relationship between an outlet luminance of a collimator and the star spots is as follows:

$$E(\lambda) = \frac{\pi}{4}\left(\frac{D}{f}\right)^2 \tau(\lambda) L(\lambda)$$

When a 40μm star spot simulates at 10Mv, the luminance value corresponding to the 40μm at the outlet of the collimator is $2.67 \times 10^{-10}$lx, and the luminance value corresponding to 400μm at the outlet of the collimator is $2.67 \times 10^{-8}$lx. The luminance value reflected back to the detection system is calculated according to the luminance value to determine a final camera.

The adjustable diaphragm 3 can effectively control the amount of light entering the system and suppress stray light.

The light source collimation system 4, having a designed working spectrum of 400nm to 900nm, is composed of a transmission structure, has a designed field of view of $2\omega=12.6°$ and a designed entrance pupil of 30mm, which means that after the light beam from the light source passes through the collimation system, the diameter of the light beam is 30mm.

The light source collimation system performs an aberration elimination process on the whole spectrum to ensure that a size of dispersion speckle is smaller than a diameter of the minimum star spot on the reticle. In the disclosure, the size of the dispersion speckle is controlled within 22 microns.

The beam splitting system 5 splits the collimated light beam into two beams, and within the designed spectral range of 400nm to 900nm, the energy of the two light beams accounts for 50%, respectively.

The neutral attenuation plate 6 attenuates the energy of the reference light to ensure that an energy difference between a light spot of the signal light and a light spot of the reference light obtained is within 10%. In addition, the aperture of the reference light is limited to about 3.2 mm.

The reflecting mirror (7) has an angle of 90.2° with an optical axis, to ensure that under ideal conditions, a pixel pitch between a light spot of the returned reference light and a light spot of the returned signal light is greater than 50 pixels, to ensure an extraction accuracy for both light spots.

The jitter compensation system 11 can rotate around two axes to adjust a light emitting direction. In order to ensure that a final compensation frequency is greater than 100HZ, and a jitter frequency of the jitter compensation reflecting mirror is greater than 500 Hz. The two axes are a pitch axis and a yaw axis, respectively.

The signal light beam-expanding system 12 is a telescopic system, which can expand a light beam from 30mm to 200 mm, and the signal light beam-expanding system 12 adopts a two-reflecting mirror design, in which a primary mirror is designed into a positive axis paraboloid, and a secondary mirror is designed into a positive axis hyperboloid. Since it is a reflective system, there is no need to consider the effect of color difference.

The sensor 13 is a measured sensor, which is mainly a high-precision star sensor, such as an ultra-high star sensor or a milli-arcsecond star sensor, etc. The mounting bracket 14 is used for mounting the sensor.

The reference light beam-expanding system 8 includes two stages of beam-expanding. During a beam-expanding process, a light beam is first expanded from 3.2mm to 40 mm and then expanded from 40 mm to 400mm. A first stage of beam-expanding adopts a structure of a traditional transmission telescope system, and a second stage of beam-expanding system adopts a two-reflecting mirror design with a beam-expanding ratio of 12.5 times, in which primary and secondary mirrors are designed as positive axis parabolic mirrors, and both of which are made of microcrystalline glass. The system is an ideal beam-expanding system, the wave aberration introduced within the range of ±0.5' is very small, resulting in negligible star spot distortion.

The microscopic imaging system 9 converges the obtained light beam of 400mm, and a convergence system also adopts a two-reflecting mirror design with a focal length of 5000mm. The primary mirror is design into a positive axis paraboloid, and a secondary mirror adopts a positive axis hyperboloid design. Since it is a reflective system, there is no need to consider the effect of color difference.

The detection imaging system 10 with a high sensitivity is capable of detecting a reflected light energy at 10Mv, and has a function of open-window extraction, achieving star spot extraction greater than 500 Hz.

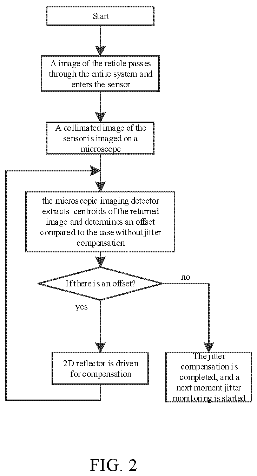

As shown in FIG. 2, a jitter compensation process is provided as follows. A collimated image of the reticle is divided into two beams by the beam splitting mirror, i.e., a signal light beam (a test light beam) and a reference light beam. The signal light enters into the sensor after passing through the entire jitter compensation system. Part of the energy of the on-axis light spot is reflected back into the microscopic imaging system through the reflecting mirror at the front end of the sensor, to obtain a light spot of the signal light, and the other reference light enters directly into a behavior imaging system to obtain a light spot of the reference light. The microscopic imaging system extracts centroids of two detected light spots, and an offset is determined by comparing with a case without jitter compensation. If there is an offset, pitch and yaw axes of the jitter compensation reflecting mirror are driven for compensation. An offset between the light spot of the signal light and the light spot of the reference light is re-determined through the microscopic imaging system. The above processes are repeated until there is no offset between the light spot of the signal light and the light spot of the reference light, and a next moment is monitored after the jitter compensation is completed. Since a response frequency and a detection imaging frequency of the jitter compensation system are not less than 500Hz, the above jitter compensation process is completed in milliseconds.

The contents that are not described in detail in the specification of the disclosure belong to common knowledge known to those skilled in the art.

**Claims**

1. A jitter compensation device for a high-precision pointing system, comprising: an adjustable color temperature light source (1), a reticle (2), an adjustable diaphragm (3), a light source collimation system (4), a beam splitting system (5), a neutral attenuation sheet (6), a reflecting mirror (7), a jitter compensation system (11), a signal light beam-expanding system (12), a reference light beam-expanding system (8), a microscopic imaging system (9), a detector (10), a sensor (13) and a mounting bracket (14) of the sensor (13);

wherein the adjustable color temperature light source (1) emits quasi-monochromatic light and composite light with different color temperatures to illuminate the reticle (2), the quasi-monochromatic light and the composite light are collimated into quasi-parallel light by the light source collimation system (4), and then split into a reference light beam and a test light beam by the beam splitting system (5), wherein the reference light beam propagates toward the neutral attenuation plate (6), and the test light beam propagates toward the jitter compensation system (11), and the adjustable diaphragm (3) is provided between the reticle (2) and the light source collimation system (4) to control an amount of light passing through and suppress stray light; the reference light beam first passes through the neutral attenuation plate (6) for a first energy attenuation, and then after being reflected by the reflecting mirror (7), passes through the neutral attenuation plate (6) for a second energy attenuation, and the light beam after the second energy attenuation is split into a second reference light beam and a third reference light beam by the beam splitting system (5), wherein the second reference light beam propagates toward the reference light beam-expanding system (8), the third reference light beam propagates toward the light source collimation system (4) and as a non-working light beam, is absorbed by structure, and the second reference light beam, after being expanded, is directly imaged via the microscopic imaging system (9) and received by the detector (10); and the test light beam passes through the jitter compensation system (11), the signal light beam-expanding system (12) and finally reaches a focal plane of the sensor (13), a reflecting mirror is arranged at an entrance of a secondary mirror of the sensor, and a part of the test light beam is reflected by the reflecting mirror back to the signal light beam-expanding system (12) and then propagates to the beam splitting system (5) through the jitter compensation system (11), to form a second test light beam and a third test light beam, wherein the third test light beam propagates toward the light source collimation system (4), and as a non-working light beam, is absorbed by structure, and the second test light beam propagates toward the reference light beam-expanding system (8), and is expanded by the reference light beam-expanding system (8) and amplified by the microscopic imaging system (9), and then received by the detector (10).

2.  The device of claim 1, wherein the adjustable color temperature light source (1) uses a light emitting diode (LED) as a light source to emit the quasi-monochromatic light and the composite light with different color temperatures, an energy of the emitted quasi-monochromatic light and the emitted composite light meets a sensitivity requirement of the pointing measurement sensor (13) for a fixed star sensitivity in a range of 0Mv to 10Mv; and a spectral range of the adjustable color temperature light source (1) is a whole spectral range of 400nm to 900nm.

3.  The device of claim 1, wherein the reticle (2) is processed by mask etching, types of fixed star spots distributed on the reticle comprise a fixed star spot in a specific sky area and a star spot in an array, and the distributed star spots have different calibers; in order to ensure an intensity of light energy of a returned signal light, a diameter of a central star spot is designed to be 400 microns, and peripheral star spots are etched by equivalent to star spot diameters through different star spot magnitude relationships.

4.  The device of claim 3, wherein the light source collimation system (4) performs an aberration elimination process on a whole spectral range to ensure that a size of dispersion speckle is smaller than a diameter of the minimum star spot on the reticle.

5.  The device of claim 1, wherein a light beam-splitting ratio of the beam splitting system (5) is controlled to be 50%: 50%, to split a collimated light beam.

6.  The device of claim 1, wherein the neutral attenuation plate (6) attenuates an energy of the reference light beam to ensure that an energy difference between a light spot of the second test light beam and a light spot of the second reference light beam is within 10%, and the neutral attenuation plate (6) also limits an aperture of the reference light beam; and
    an angle between the reflecting mirror (7) and an optical axis is 90.2°, so that a pixel pitch between a light spot of the returned second reference light beam and a light spot of the returned second test light beam is greater than 50 pixels.

7.  The device of claim 1, wherein the jitter compensation reflecting mirror (11) is rotatable around two axes to adjust a light emitting direction, a jitter frequency of the jitter compensation reflecting mirror (11) is greater than 500 Hz, and Proportional-Integral-Derivative (PID) is used to control swing of the jitter compensation reflecting mirror, to achieve a compensation for environmental jitter not greater than 100 Hz, wherein the two axes are a pitch axis and a yaw axis, respectively.

**8.** The device of claim 1, wherein the signal light beam-expanding system (12) is a telescopic system, and is configured to expand a light beam from 30mm to 200 mm, and the signal light beam-expanding system (12) adopts a two-reflecting mirror design, wherein a primary mirror is designed into a positive axis paraboloid, and a secondary mirror is designed into a positive axis hyperboloid;

the sensor (13) is a measured star sensor to be measured, and the mounting bracket (14) is used for mounting the sensor (13); and the reference light beam-expanding system (8) comprises two stages of beam-expanding, during a beam-expanding process, a light beam is first expanded from 3.2mm to 40 mm and then expanded from 40 mm to 400mm, a first stage of beam-expanding adopts a structure of a transmission telescope system, and a second stage of beam-expanding system adopts a two-reflecting mirror design with a beam-expanding ratio of 12.5 times, wherein primary and secondary mirrors are designed as positive axis parabolic mirrors, and both are made of microcrystalline glass.

**9.** The device of claim 8, wherein the microscopic imaging system (9) amplifies and images the reference light beam and a signal light beam, the microscopic imaging system (9) adopts a two-reflecting mirror design to converge the obtained 400mm light beam, and has a focal length of 5000mm, wherein a primary mirror is designed into a positive axis paraboloid, and a secondary mirror is designed into a positive axis hyperboloid; and
the detection imaging system (10) is capable of detecting a reflected light energy at 10 Mv and achieving star spot extraction greater than 500 Hz.

**10.** A jitter compensation method based on the jitter compensation device for a high-precision pointing system of any one of claims 1-9, the method comprises the following steps:

Step 1, extracting, by the microscopic imaging system, centroids of two detected light spots;
Step 2, determining an offset amount by comparing the centroid obtained by returning the second test light beam with a case without jitter compensation, and if there is an offset, driving pitch and yaw axes of the jitter compensation reflecting mirror for jitter compensation; and

Step 3, re-determining an offset between light spots formed by the second test light beam and the second reference light beam through the microscopic imaging system, repeating steps 2 and 3 until there is no offset between light spots of the second test light beam and the second reference light beam, and monitoring a next moment after the jitter compensation is completed.

FIG. 1

```
                        ┌──────────────────┐
                        │      Start        │
                        └──────────────────┘
                                 │
                                 ▼
                   ┌──────────────────────────┐
                   │  A image of the reticle   │
                   │  passes through the entire │
                   │  system and enters the     │
                   │        sensor              │
                   └──────────────────────────┘
                                 │
                                 ▼
                   ┌──────────────────────────┐
                   │  A collimated image of the │
                   │    sensor is imaged on a   │
                   │        microscope          │
                   └──────────────────────────┘
                                 │
                                 ▼
                   ┌──────────────────────────┐
                   │ the microscopic imaging    │
                   │ detector extracts centroids │
                   │ of the returned image and   │
                   │ determines an offset        │
                   │ compared to the case without│
                   │ jitter compensation         │
                   └──────────────────────────┘
                                 │
                                 ▼
                        ╱────────────────╲       no
                       ⟨ If there is an offset? ⟩────┐
                        ╲────────────────╱           │
                                 │                    │
                               yes                    │
                                 │                    │
                                 ▼                    ▼
                   ┌─────────────────┐   ┌──────────────────┐
                   │ 2D reflector is │   │ The jitter        │
                   │ driven for      │   │ compensation is   │
                   │ compensation    │   │ completed, and a  │
                   └─────────────────┘   │ next moment jitter│
                                          │ monitoring is     │
                                          │ started           │
                                          └──────────────────┘
```

FIG. 2

## INTERNATIONAL SEARCH REPORT

| International application No. |
|---|
| **PCT/CN2022/112710** |

**A.    CLASSIFICATION OF SUBJECT MATTER**

G01C 25/00(2006.01)i

According to International Patent Classification (IPC) or to both national classification and IPC

**B.    FIELDS SEARCHED**

Minimum documentation searched (classification system followed by classification symbols)

G01C, G01S, G01B

Documentation searched other than minimum documentation to the extent that such documents are included in the fields searched

Electronic data base consulted during the international search (name of data base and, where practicable, search terms used)

CNABS, CNTXT, WPABSC, ENTXTC, VEN: 抖动, 振动, 摆动, 颤动, 扰动, 补偿, 补正, 校正, 校准, 反射, 参考, 参照, 光, 脉冲, 束, 测量, 测试, 信号, 探测, 分光, 分束, 旋转, 转动, 星敏感器, 星模拟, 指向传感器, 指向敏感器, 指向系统, 准直

**C.    DOCUMENTS CONSIDERED TO BE RELEVANT**

| Category* | Citation of document, with indication, where appropriate, of the relevant passages | Relevant to claim No. |
|---|---|---|
| PX | CN 114812602 A (BEIJING INSTITUTE OF CONTROL ENGINEERING) 29 July 2022 (2022-07-29)<br>claims 1-10, description, paragraphs [0005]-[0052], and figures 1-2 | 1-10 |
| X | CN 112129323 A (CAS NANJING ASTRONOMICAL INSTRUMENTS CO., LTD.) 25 December 2020 (2020-12-25)<br>description, paragraphs [0026]-[0035], and figures 1-4 | 1-10 |
| A | CN 109579776 A (HARBIN INSTITUTE OF TECHNOLOGY) 05 April 2019 (2019-04-05)<br>entire document | 1-10 |
| A | CN 113687521 A (HARBIN INSTITUTE OF TECHNOLOGY) 23 November 2021 (2021-11-23)<br>entire document | 1-10 |
| A | JP 2001004538 A (MATSUSHITA ELECTRIC INDUSTRIAL CO., LTD.) 12 January 2001 (2001-01-12)<br>entire document | 1-10 |
| A | CN 102176087 A (HARBIN INSTITUTE OF TECHNOLOGY) 07 September 2011 (2011-09-07)<br>entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2022** | **19 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/112710**

| Patent document cited in search report | | | Publication date (day/month/year) | Patent family member(s) | Publication date (day/month/year) |
|---|---|---|---|---|---|
| CN | 114812602 | A | 29 July 2022 | None | |
| CN | 112129323 | A | 25 December 2020 | None | |
| CN | 109579776 | A | 05 April 2019 | None | |
| CN | 113687521 | A | 23 November 2021 | None | |
| JP | 2001004538 | A | 12 January 2001 | None | |
| CN | 102176087 | A | 07 September 2011 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210248904